# EUROPEAN PATENT SPECIFICATION

(11) **EP 1 681 796 B1**
(45) Date of publication and mention of the grant of the patent: **23.07.2008**
(21) Application number: 04789848.1
(22) Date of filing: 20.10.2004
(51) Int. Cl.: H04L 12/14

(54) **WIRELESS LOCAL AREA NETWORK PREPAID BILLING SYSTEM AND METHOD**
PREPAID-GEBÜHRENVERRECHNUNGSSYSTEM UND -VERFAHREN FÜR EIN DRAHTLOSES LOKALES NETZWERK
SYSTEME ET PROCEDE DE FACTURATION AVEC PREPAIEMENT DANS UN RESEAU LOCAL SANS FIL

(30) Priority: 24.10.2003 CN 200310103719
(43) Date of publication of application: 19.07.2006
(73) Proprietor: Huawei Technologies Co., Ltd., Longgang District, Shenzhen, Guangdong 518129 (CN)
(72) Inventor: GAO, Jianghai, Huawei Administration Building, Shenzhen, Guangdong 518129 (CN); LI, Xiaoyan, Huawei Administration Building, Shenzhen, Guangdong 518129 (CN); ZHAO, Yi, Huawei Administration Building, Shenzhen, Guangdong 518129 (CN); CHEN, Dianfu, Huawei Administration Building, Shenzhen, Guangdong 518129 (CN); LIN, Ming Huawei Administration Building, Shenzhen Guangdong 518129 (CN); WANG, Jing Huawei Administration Building, Shenzhen Guangdong 518129 (CN); CHEN, Weimin Huawei Administration Building, Shenzhen Guangdong 518129 (CN); ZHENG, Xiaochun Huawei Administration Building, Shenzhen Guangdong 518129 (CN); PENG, Wenqin, CHENGDU CITY, Sichuan Province 61000, CHINA (CN); PAN, Qiang, Huawei Administration Building, Shenzhen, Guangdong 518129 (CN); XIE, Ling, Huawei Administration Building, Shenzhen, Guangdong 518129 (CN); XIE, Nan, Huawei Administration Building, Shenzhen, Guangdong 518129 (CN); JIN, Guangliang, Huawei Administration Building, Shenzhen, Guangdong 518129 (CN); OUYANG, Rongbing, Huawei Administration Building, Shenzhen, Guangdong 518129 (CN)
(74) Representative: Collin, Jérôme
(86) International application number: PCT/CN2004/001189
(87) International publication number: WO 2005/041477

(56) References cited:
- EP-A- 1 320 214
- WO-A-03/088578
- WO-A1-03/088578
- US-A1- 2002 116 338
- US-A1- 2003 050 041
- US-A1- 2003 140 256
- TAN Z.Z. ET AL: 'Architecture of WLAN Access Network Used in Mobile Environment' COMMUNICATION TECHNOLOGY no. 2, April 2003,

## Description

### Field of the Invention

The present invention relates to accounting of a Wireless Local Area Network (WLAN), and particularly to an accounting system for a WLAN prepaid subscriber and an accounting method thereof.

### Background of the Invention

A Wireless Local Area Network (WLAN) refers to a computer local area network using a wireless channel as a transmission medium. The WLAN has been developed based upon a wired network. It provides a computer or terminal in the network with mobility and flexibility, which are difficult to achieve in a wired network. Therefore it has been widely applicable in fields where mobile processing of data is required or wiring of physical transmission media can not be done. With the establishment and development of an IEEE 802 .11 wireless network standard, the wireless network technology tends to be mature and perfect, which can provide the subscriber with a more secure, reliable and efficient solution for a long-distance network interconnection, and has been widely used in such fields as enterprises, public hotspot places, etc.

A WLAN product generally includes two parts: a wireless network card and an Access Point (AP). An operational mode is that the wireless network card is installed in a terminal, such as a notebook computer, a desktop computer, a Personal Digital Assistant (PDA), etc., and is connected wirelessly with the AP which is in turn connected with a wired network in a wired way, thus enabling a connection with another network, for example, the Internet.

The WLAN is generally applicable to indoor mobile office and outdoor remote backbone interconnection. It effectively solves the following problems: the wiring or adaptation of wires is labor-consuming, the wires are liable to be damaged, sites within the network are unable to move, and particularly how two Local Area Networks (LANs) are connected across dozens of kilometers. It also solves the problems of low transmission rate, high bit error rate, poor reliability of wiring and high rent during a transmission via a telephone line. The wireless network is provided with a powerful encryption technology and a radiation of one-third lower than that of a cell phone, and can deploy a free frequency band of 2.4GHz, relieving the future worries of subscribers in various industries.

The WLAN involves various technologies, among which one technology standard widely-used is the IEEE 802. 11b. The standard of IEEE 802.11b operates at a frequency band of 2.4GHz, adopts the technology of Complementary Code Keying Modulation, and has a transmission rate up to 11Mibt/s. The standard of IEEE 802.11b has such advantages as a reliable communication, a low cost, flexibility, mobility, a high throughput, etc.

With the development of the WLAN, traditional operators are also striving to establish WLAN networks. However, one major problem the operators have to face is how to account for WLAN subscribers. There currently exists a common accounting method, which can achieve a unification of WLAN accounting and traditional mobile network accounting through a Business & Operation Support System (BOSS) of the operator. The BOSS system utilizes a computer network system to implement an integrated technology platform supporting services of the operators. Its functions cover various aspects, such as accounting, settlement, account processing, account management, client service, business management, etc. With this integrated platform, it is possible to achieve an integration, a central management and a sufficient share of information and resources from all departments and business systems. The accounting system of BOSS involves two processes of: accounting data collection, and rating. The process of accounting data collection collects basic original data and information concerned and performs a corresponding preprocess, such as error check, format conversion, etc. Results generated from the above processes can record what is related to uses of a service by a subscriber. The process of rating involves calculation of charges to the subscriber.

Currently, the payment method adopted for WLAN accesses is mainly Postpayment, i.e., a server records the online duration or data traffics of the subscriber and settles the total amount monthly. A monthly fee mode is adopted as an alternative way of payment.

In practical applications, the above solution has a problem that it can not achieve real-time accounting for a prepaid subscriber.

One main reason for such a problem lies in that, a mechanism for a direct information exchange is absent between an Authentication Server (AS) and a Service Control Point (SCP).
Document US 2002/0116338 A1 discloses a system for prepaid access to an Internet Protocol (IP) network, wherein a user has a specific Internet prepaid account configured in his terminal and in a Prepaid Server (PPS). When the user wants to access the IP network, an access server (AS) requests that the PPS authenticate the terminal and, if accepted, responds with a message informing the access server of how much the terminal can utilise network resources before a re-authentication is necessary.

### Summary of the Invention

A problem settled by the present invention is to provide a prepaid accounting system for a wireless local area network (WLAN) and a method thereof, which enable a prepaid subscriber to access the WLAN and achieve real-time accounting to the subscriber.

In order to solve the above technical problem, an embodiment of the present invention provides a prepaid accounting system for a Wireless Local Area Network (WLAN), which may include an authentication control point, an authentication server and a service control point.

The authentication control point is used to control an access of a subscriber to the wireless local area network, send an accounting request including accounting information to the authentication server, and continue or terminate the access of the subscriber to the WLAN in accordance with a response message from the authentication server.

The authentication server is used to perform authentication, authorization and accounting for the subscriber, send an authentication request to the service control point, requesting for update and check of the account balance of the subscriber, and notify the authentication control point of whether to permit the subscriber to continue the access according to a response from the service control point.

The service control point is used to store information of the subscriber, and to update and notify the authentication server of the account balance of the subscriber in accordance with the authentication request.

Preferably, the authentication control point is further used to send the authentication server an accounting-start request message, which includes the accounting information of the subscriber; the authentication server is further used to send the service control point the authentication request message requesting for the check of the account balance of the subscriber, and to respond to the authentication control point with an accounting-start response message upon receipt of the response message.

Preferably, the service control point is further used to respond to the authentication server with an authentication-request response message including the check result.

Preferably, the authentication control point is further used to periodically send the authentication server a midterm-accounting request message, which includes information of the total duration and the total traffic of the access to the wireless local area network of the subscriber;

the authentication server is further used to send the service control point the authentication request message requesting the check of the account balance of the subscriber, and to respond to the authentication control point with a midterm-accounting response message; and

the service control point is further used to update the account balance of the subscriber and to respond to the authentication server with an authentication-request response message including the check result.

Preferably, the authentication control point is further used to send the authentication server an accounting-termination request message, which includes information of the total duration and the total traffic of the access to the wireless local area network of the subscriber;

the authentication server is further used to respond to the authentication control point with an accounting-termination response message, and to send the authentication request message to the service control point; and

the service control point is further used to update the account balance of the subscriber and to respond to the authentication server with an authentication-request response message.

Preferably, protocol Remote Access Dial-In User Services (RADIUS) may be used for communication between the authentication control point and the authentication server.

Preferably, protocol extended Short Message Peer to Peer may be used for communication between the authentication server and the service control point.

A prepaid accounting method for a WLAN according to an embodiment of the present invention, includes the steps of:

A. upon the start of accounting, an authentication server requesting a service control point to check an account balance of a subscriber in accordance with accounting information from an authentication control point, and the service control point responding to the authentication server with the check result;

B. during the accounting for the subscriber, the authentication server periodically requesting the service control point to check the account balance of the subscriber in accordance with the accounting information from the authentication control point, and the service control point updating the account balance of the subscriber in response to the request from the authentication server and responding to the authentication server with the check result; and

C. upon the termination of the accounting, the authentication server notifying the service control point of the termination of the accounting for the subscriber in accordance with the accounting information from the authentication control point, and the service control point updating the account balance.

Preferably, upon a system initialization, the method may further include the steps of:

the service control point requesting the authentication server to establish a Short Message Peer to Peer (SMPP) connection therewith; and

the authentication server responding to the service control point in responsive to the request and establishing the SMPP connection.

Preferably, upon disconnecting the WLAN, the method may further include the steps of:

the authentication server requesting the service control point to release the connection; and

the service control point responding to the authentication server in responsive to the request.

Preferably, the method may further include the following step before step A:

the subscriber gaining an access to the WLAN through an authentication.

Preferably, step A may further include the steps of:

A1. the authentication control point sending the authentication server an accounting-start request message, which includes the accounting information of the subscriber;

A2. the authentication server sending the service control point an authentication request message requesting the check of the account balance of the subscriber;

A3. the service control point responding the authentication server with an authentication-request response message including the check result; and

A4. the authentication server responding to the authentication control point with an accounting-start response message.

Preferably, step B may further include the steps of:

B1. the authentication control point periodically sending the authentication server a midterm-accounting request message, which includes information of the total duration and the total traffic of the access to the wireless local area network of the subscriber;

B2. the authentication server sending the service control point an authentication request message requesting the check of the account balance of the subscriber;

B3 the service control point updating the account balance of the subscriber and responding to the authentication server with an authentication-request response message including the check result; and

B4. the authentication server responding to the authentication control point with a midterm-accounting response message.

Preferably, step C may further include the steps of:

C1. the authentication control point sending the authentication server an accounting-termination request message, which includes information of the total duration and the total traffic of the access to the wireless local area network of the subscriber;

C2. the authentication server responding to the authentication control point with an accounting-termination response message;

C3. the authentication server sending the authentication request message to the service control point; and

C4 the service control point updating the account balance of the subscriber and responding to the authentication server with an authentication-request response message.

It can be comparatively found that, the technical solutions according to the embodiments of the present invention differ from the prior art in that, the authentication server transfers the accounting information included in the accounting message sent from the authentication control point to the service control point, and the service control point performs an advance deduction of fee or refuses the subscriber to continue his use of the WLAN service in accordance with the account balance of the subscriber and a predetermined policy, and returns the result to the authentication control point via the authentication server.

Such differences of the technical solutions will lead to obvious and advantageous effects, that is, the accounting to a WLAN prepaid subscriber can be achieved so conveniently that a new accounting method other than existing accounting methods can be provided for a WLAN subscriber and operators, and the demand can be met for subscribers in a conventional mobile network intending to use prepaid approach for his access to the WLAN.

### Brief Descriptions of the Drawings

Figure 1 is a structure diagram of a WLAN prepaid accounting system according to an embodiment of the present invention; and

Figure 2 is a flow diagram of a WLAN prepaid accounting method according to an embodiment of the present invention.

### Detailed Descriptions of the Embodiments

Hereafter the present invention will be further described in detail with reference to the drawings in order to make objects, technical solutions and advantages of the present invention more apparent.

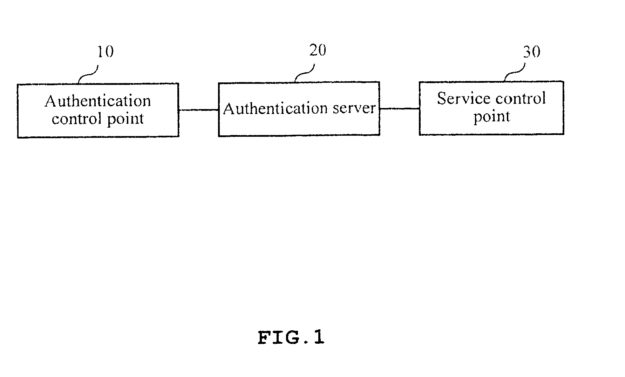

As shown in FIG. 1, a WLAN prepaid accounting system according to an embodiment of the present invention includes an authentication control point 10, an authentication server 20 and a service control point 30, wherein the authentication server 20 is connected with the authentication control point 10 and the service control point 30 respectively. They communicate with each other via interfaces between them through standard interface protocols. The authentication server 20 is responsible for conversion of the protocols.

The authentication control point 10 controls a prepaid subscriber to access the WLAN, sends an accounting-start or accounting-termination request message to the authentication server 20, and receives a response message from the authentication server 20. In the embodiment, the authentication control point 10 may be an Access Point (AP) or an Access Controller (AC) . It should be noted that, in the embodiment, the protocol Remote Access Dial-In User Service (RADIUS) is for the communication between the authentication control point 10 and the authentication server 20.

The authentication server 20 performs Authentication, Authorization and Accounting for the subscriber. General modes of authentication include Subscriber Identification Module (SIM) authentication and One Time Password (OTP) authentication. The SIM authentication refers to that the subscriber inserts his SIM card, which contains identity information thereof, into a SIM card slot or a SIM card reader in a network card, logins without an input of his username or password, and is authenticated with corresponding information in the SIM card, and charges are recorded in an account of the SIM card. The OPT authentication introduces an uncertain factor in the login procedure, that is, the subscriber obtains a one-time temporary password in a certain way upon each login, and the password is valid only during the network linking of the subscriber for this time, thereby improving security of the login procedure. Currently, post--pay method or prepaid method is commonly used. The post-pay method refers to that the system adds a record of use in the database each time after the service to the subscriber, followed by a settlement at a certain interval. The prepaid method refers to that the system queries for the qualification and balance of the subscriber prior to his use of the service, only enables a subscriber who meets a requirement to qualify for further use of the service, and updates the data and qualification of the subscriber in a real-time way during his use of the service. The embodiment of the present invention is intended for a prepaid subscriber.

The service control point 30 stores prepaid information of the subscriber for the query of the authentication server 20. In the embodiment, protocol SMPP+ is used for the communication between the authentication server 20 and the service control point 30. Here, the SMPP refers to the Short Message Peer to Peer, and the SMPP+ protocol is an extension to the SMPP protocol and the two protocols are both used for the SMS. In the embodiment of the present invention, the SMPP+ protocol is applied to real-time accounting of the WLAN for the first time.

Such a mechanism as a direct communication of messages between the authentication server 20 and the service control point 30 makes it possible to perform a real-time accounting for prepaid subscribers in the conventional mobile network who access the WLAN.

With reference to the WLAN prepaid accounting system as shown in FIG.1, the operation procedure thereof will be further described hereinafter.

The service control point 30 and the authentication server 20 are bound through a binding message therebetween. When the prepaid subscriber intends to use the WLAN service, the authentication server 20 converts an accounting-start message received from the authentication control point 10 into an authentication request message and sends it to the service control point 30, which in turn provides the subscriber with the service and initiates accounting or refuses to provide the subscriber with the service according to the subscriber's account balance and a predetermined policy. In case an authentication is successful and the service is initiated, the authentication control point 10 sends a midterm-accounting request message periodically to the authentication server 20 during the service, which in turn converts the message into an authentication request message and sends the same to the service control point 30, thereby achieving the real-time accounting. When the prepaid subscriber gets offline, the authentication control point 10 sends an accounting-termination request message to the authentication server 20, which in turn converts the message into an authentication request message to the service control point 30, thereby terminating the accounting. The binding relationship between the authentication server 20 and the service control point 30 can be released through a binding-release message.

The embodiment of the WLAN prepaid accounting system has been described as above, and a detailed flow of a WLAN prepaid accounting method will be described hereinafter.

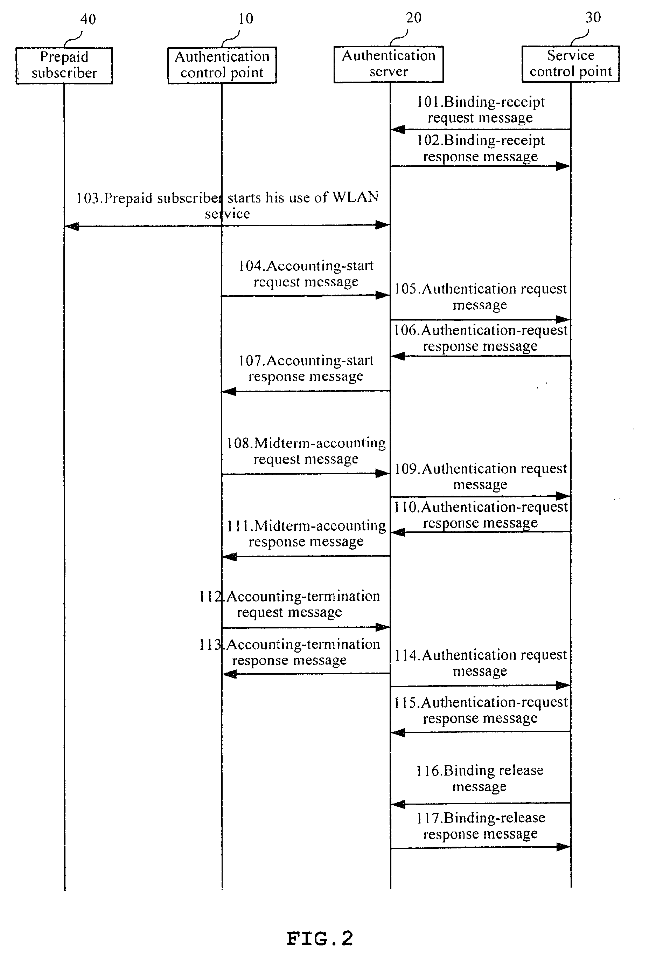

As shown in FIG.2, at step 101, the service control point 30 sends a binding-receipt request message to the authentication server 20 and requests establishing a SMPP connection therewith.

In step 102, upon receipt of the request message, the authentication server 20 sends a binding-receipt response message to the service control point 30, indicating its receipt of the request from the service control point 30, and thereby the SMPP connection is established between application layers of both. In order to ensure a reliable transmission of information under the existing network circumstance, the Transmission Control Protocol (TCP) may be applied by the transmission layer for connection. It should be noted that step 101 and step 102 are performed once only at the time of system initialization, and the accounting for each prepaid subscriber starts with step 103.

In step 103, a prepaid subscriber 40 accesses a WLAN through the SIM authentication or the OTP authentication, and begins to use the WLAN service.

In step 104, the authentication control point 10 notifies the authentication server 20 of initiation of accounting by sending an accounting-start request message, which includes corresponding accounting information, such as subscriber account, time information, etc.

In step 105, the authentication server 20 sends the service control point 30 an authentication request message, which requests a check of account balance of the subscriber. This message is sent for determining whether the prepaid subscriber 40 is qualified for further use of the WLAN service to avoid his overdraft and the loss brought to the operator.

In step 106, the service control point 30 sends an authentication-request response message to the authentication server 20. The service control point 30 queries the database for the balance of the prepaid subscriber 40 before sending the authentication-request response message back. On concerning the amount of balance, the service control point 30 performs different processing. In case the balance is sufficient, an advance deduction of fee is performed in accordance with the predetermined policy. Specific policies can be schemed according to a practical situation, for instance, each time an authentication request message is received, a certain amount of balance is deducted in advance, and it is indicated that the subscriber can continue his use of the WLAN for predetermined time. For example, if the SCP receives an authentication request message from the authentication server 20, 0.5 RMB Yuan is deducted which indicates the permission of the subscriber to continue his use of the WLAN for 5 minutes. As an alternative scheme, the deduction of fee can also be performed in accordance with the traffic used by the subscriber. The authentication-request response message indicates the service control point 30 may notify the authentication server 20 of permitting the subscriber to continue his use of the WLAN. In case the balance is insufficient, the subscriber is refused to continue his use of the WLAN.

In step 107, the authentication server 20 sends an accounting-start response message to the authentication control point 10, indicating that the accounting is started and the subscriber can use the WLAN service normally.

In step 108, the authentication control point 10 sends the authentication server 20 a midterm-accounting request message periodically, which includes information of the total duration and the total traffic of the current subscriber. The message is sent for sending the information of accounting timely for an update of the account balance of the subscriber, thereby enabling a real-time management of qualification of the prepaid subscriber 40. The time interval at which to send the message may be set by an administrator in advance in accordance with different requirements of precision.

In step 109, the authentication server 20 converts the midterm-accounting request message into an authentication request message and sends it to the service control point 30. Corresponding conversion policies may be set in accordance with a practical situation. A feasible policy will be described as follows.

The authentication server 20 initiates a process for an advance deduction of fee of the next period for the subscriber upon receipt of the midterm-accounting request message. If the advance deduction of fee is time-based, the period of the advance deduction of fee is the interval at which the authentication control point 10 reports the midterm-accounting request message, and the authentication server 20 divides the interval into configured fixed durations, each of which corresponds to one authentication request message. Also, the interval may be divided in a traffic-based way. After the number of the authentication messages is obtained, the authentication request message is sent to the service control point 30 to initiate the authentication process and perform the real-time advance deduction of fee. For example, the authentication server 20 receives and processes the midterm-accounting request message sent from the authentication control point 10, and the process for the advance deduction of fee of the next period is initiated. If the interval at which the authentication control point 10 sends the midterm-accounting request message is 5 minutes, and the configured fixed duration is also 5 minutes, then the authentication server 20 sends one authentication request message to the service control point 30 for the advance deduction of fee.

In step 110, the service control point 30 sends an authentication-request response message to the authentication server 20, wherein the processing policy is the same as in step 106.

In step 111, the authentication server 20 sends a midterm-accounting response message to the authentication control point 10, and notifies the authentication control point 10 of the successful midterm accounting.

In case the subscriber gets offline, in step 112, the authentication control point 10 sends an accounting-termination request message to the authentication server 20, and notifies the authentication server 2.0 that the subscriber has got offline, wherein the accounting-termination request message includes information of the total duration and the total traffic of the access to the network by the subscriber.

In step 113, the authentication server 20 sends an accounting-termination response message to the authentication control point 10.

In step 114, the authentication server 20 converts the accounting-termination request message into an authentication request message and sends the same to the service control point 30, wherein the processing by the authentication server 20 is the same as in step 109.

In step 115, the service control point 30 sends an authentication-request response message to the authentication server 20, wherein the processing policy is the same as in step 106.

When it is required that the connection be released between the service control point 30 and the authentication server 20, the service control point 30, in step 116, sends a binding release message to the authentication server 20 for requesting a release of the connection with the authentication server 20.

In step 117, the authentication server 20 sends a binding release response message to the service control point 30, and releases the connection with the service control 30. It should be noted that step 116 and step 117 are generally performed by the administrator at the time of disconnecting the network, not merely performed for a particular subscriber.

While the present invention has been illustrated and described with reference to preferred embodiments thereof, it will be apparent to those skilled in the art that it may be possible to make various modifications of the present invention without departing the scope of the present invention.

## Claims

1. A prepaid accounting system for a wireless local area network WLAN, comprising:
an authentication control point (10);
an authentication server (20); and
a service control point (30), wherein
the authentication control point (10) is arranged to control an access of a subscriber to the wireless local area network, send the authentication server an accounting request message of a authentication protocol including accounting information (104, 108, 112), and continue or terminate the access of the subscriber to the WLAN in accordance with a response message (107, 111, 113) from the authentication server;
the authentication server (20) is arranged to receive the accounting request message of the authentication protocol from the authentication control point, convert the accounting request message of the authentication protocol into an authentication request message of a wireless communication protocol different from the authentication protocol, send to the service control point the authentication request message of the wireless communication protocol requesting for update (105, 109, 114) and check of the account balance of the subscriber, and notify the authentication control point (10) of whether to permit the subscriber to continue the access in accordance with a response (106, 110, 115) from the service control point; and
the service control point (30) is arranged to store information of the subscriber, and to update and notify the authentication server (20) of the account balance of the subscriber in accordance with the authentication request message (105, 109, 114).

2. The prepaid accounting system for a wireless local area network according to claim 1, wherein
the authentication control point (10) is further arranged to send the authentication server an accounting-start request message (104), which includes the accounting information of the subscriber;
the authentication server (20) is further arranged to send the service control point the authentication request message (105) requesting for the check of the account balance of the subscriber, and to respond to the authentication control point (10) with an accounting-start response message (107) upon receipt of the response message; and
the service control point (30) is further arranged to respond to the authentication server with an authentication-request response message (106) including the check result.

3. The prepaid accounting system for a wireless local area network according to claim 1, wherein
the authentication control point (10) is further arranged to periodically send the authentication server a midterm-accounting request message (108), which includes information of the total duration and the total traffic of the access to the wireless local area network of the subscriber;
the authentication server (20) is further arranged to send the service control point the authentication request message (109) requesting the check of the account balance of the subscriber, and to respond to the authentication control point (10) with a midterm-accounting response message (110); and
the service control point (30) is further arranged to update the account balance of the subscriber and to respond to the authentication server with an authentication-request response message including the check result (110).

4. The prepaid accounting system for a wireless local area network according to claim 1, wherein
the authentication control point (10) is further arranged to send the authentication server (20) an accounting-termination request message (112), which includes information of the total duration and the total traffic of the access to the wireless local area network of the subscriber;
the authentication server (20) is further arranged to respond to the authentication control point (10) with an accounting-termination response message (113), and to send the authentication request message to the service control point (114); and
the service control point (30) is further arranged to update the account balance of the subscriber and to respond to the authentication server with an authentication-request response message (115).

5. A prepaid accounting method for a wireless local area network, comprising the steps of:
A. upon the start of accounting, an authentication server (20) requesting a service control point (30) to check an account balance of a subscriber in accordance with accounting information from an authentication control point (10), and the service control point (30) responding to the authentication server (20) with the check result;
B. during the accounting for the subscriber, the authentication server (20) periodically requesting the service control point to check the account balance of the subscriber in accordance with the accounting information, and the service control point (30) updating the account balance of the subscriber in response to the request from the authentication server (20) and responding to the authentication server with the check result; and
C. upon the termination of the accounting, the authentication server (20) notifying the service control point (30) of the termination of the accounting for the subscriber in accordance with the accounting information, and the service control point updating the account balance,
wherein, an authentication protocol is used for communication between the authentication control point (10) and the authentication server (20), a wireless communication protocol different from the authentication protocol is used for communication between the authentication server (20) and the service control point (30), and the authentication server (20) converts the authentication protocol and the wireless communication protocol between the authentication control point (10) and the service control point (30).

6. The prepaid accounting method for a wireless local area network according to claim 5, wherein the step A further comprises the sub-steps of:
A1. the authentication control point sending the authentication server an accounting-start request message (104), which includes the accounting information of the subscriber;
A2. the authentication server sending the service control point an authentication request message (105), for requesting the check of the account balance of the subscriber;
A3. the service control point responding the authentication server with an authentication-request response message (106) including the check result; and
A4. the authentication server responding to the authentication control point with an accounting-start response message (107).

7. The prepaid accounting method for a wireless local area network according to claim 5, wherein the step B further comprises the sub-steps of:
B1. the authentication control point periodically sending the authentication server a midterm-accounting request message (108), which includes information of the total duration and the total traffic of the access to the wireless local area network of the subscriber;
B2. the authentication server sending the service control point an authentication request message (109), for requesting the check of the account balance of the subscriber;
B3. the service control point updating the account balance of the subscriber and responding to the authentication server with an authentication-request response message (110) including the check result; and
B4. the authentication server responding to the authentication control point with a midterm-accounting response message (111).

8. The prepaid accounting method for a wireless local area network according to claim 5, wherein the step C further comprises the sub-steps of:
C1. the authentication control point sending the authentication server an accounting-termination request message (112), which includes information of the total duration and the total traffic of the access to the wireless local area network of the subscriber;
C2. the authentication server responding to the authentication control point with an accounting-termination response message (113);
C3. the authentication server sending the authentication request message to the service control point (114); and
C4. the service control point updating the account balance of the subscriber and responding to the authentication server with an authentication-request response message (115).

9. The prepaid accounting method for a wireless local area network according to claim 5, 6, 7 or 8, wherein upon a system initialization, the method further comprises the steps of:
the service control point (30) requesting the authentication server (20) to establish a short message peer to peer connection therewith; and
the authentication server (20) responding and establishing the short message peer to peer connection.

10. The prepaid accounting method for a wireless local area network according to claim 5, 6, 7 or 8, wherein upon disconnecting the wireless local area network, the method further comprises the steps of:
the authentication server (20) requesting the service control point (30) to release the connection; and
the service control point (30) responding to the authentication server (20) in response to the request.

11. The prepaid accounting method for a wireless local area network according to claim 5, 6, 7 or 8, further comprising the following step before step A:
the subscriber gaining an access to the wireless local area network through an authentication.

## Patentansprüche

1. Prepaid-Abrechnungssystem für ein drahtloses lokales Netzwerk, WLAN, umfassend:
einen Authentifizierungs-Kontrollpunkt (10);
einen Authentifizierungs-Server (20); und
einen Dienstkontrollpunkt (30), wobei
der Authentifizierungs-Kontrollpunkt (10) so ausgestattet ist, dass er einen Zugriff eines Teilnehmers auf ein drahtloses lokales Netzwerk steuert, an den Authentifizierungs-Server eine Abrechnungs-Anforderungs-Nachricht eines Authentifizierungs-Protokolls sendet, die Abrechnungs-Informationen (104, 108, 112) umfasst, und den Zugriff des Teilnehmers auf das WLAN entsprechend einer Antwort-Nachricht (107, 111, 113) vom Authentifizierungs-Server fortsetzt oder beendet;
der Authentifizierungs-Server (20) so ausgestattet ist, dass er die Abrechnungs-Anforderungs-Nachricht des Authentifizierungs-Protokolls vom Authentifizierungs-Kontrollpunkt empfängt, die Abrechnungs-Anforderungs-Nachricht des Authentifizierungs-Protokolls in eine Authentifizierungs-Anforderungs-Nachricht eines Protokolls zu drahtlosen Kommunikation umwandelt, das sich vom Authentifizierungs-Protokoll unterscheidet, die Authentifizierungs-Anforderungs-Nachricht des Protokolls zur drahtlosen Kommunikation, welche die Aktualisierung (105, 109, 114) und Überprüfung des Kontostandes des Teilnehmers anfordert, zum Dienstkontrollpunkt sendet, und den Dienstkontrollpunkt (10) darüber informiert, ob der Teilnehmer gemäß einer Antwort (106, 110, 115) des Dienstkontrollpunktes die Erlaubnis hat, den Zugriff fortzusetzen; und
der Dienstkontrollpunkt (30) so ausgestattet ist, dass er Information des Teilnehmers speichert und den Authentifizierungs-Server (20) aktualisiert und über den Kontostand des Teilnehmers entsprechend der Authentifizierungs-Anforderungs-Nachricht (105, 109, 114) benachrichtigt.

2. Prepaid-Abrechnungssystem für ein drahtloses lokales Netzwerk gemäß Anspruch 1, wobei
der Authentifizierungs-Kontrollpunkt (10) ferner so ausgestattet ist, dass er an den Authentifizierungs-Server eine Anforderungs-Nachricht zum Start der Abrechnung (104) sendet, die die Abrechnungs-Information des Teilnehmers umfasst;
der Authentifizierungs-Server (20) ferner so ausgestattet ist, dass er die Authentifizierungs-Anforderungs-Nachricht (105), die die Überprüfung des Kontostandes des Teilnehmers anfordert, an den Dienstkontrollpunkt sendet, und dem Authentifizierungs-Kontrollpunkt (10) bei Empfang der Antwort-Nachricht mit einer Antwort-Nachricht über den Start der Abrechnung (107) antwortet; und
der Dienstkontrollpunkt (30) ferner so ausgestattet ist, dass er dem Authentifizierungs-Server mit einer Antwort-Nachricht auf die Authentifizierungs-Anforderung (106) antwortet, die das Ergebnis der Überprüfung umfasst.

3. Prepaid-Abrechnungssystem für ein drahtloses lokales Netzwerk gemäß Anspruch 1, wobei
der Authentifizierungs-Kontrollpunkt (10) ferner so ausgestattet ist, dass er an den Authentifizierungs-Server regelmäßig eine Nachricht zur Anforderung einer Zwischen-Abrechnung (108) sendet, die Informationen über die Gesamtdauer und den Gesamtverkehr des Zugriffs auf das lokale Netzwerk durch den Teilnehmer umfasst;
der Authentifizierungs-Server (20) ferner so ausgestattet ist, dass er an den Dienstkontrollpunkt die Authentifizierungs-Anforderungs-Nachricht (109) sendet, die die Überprüfung des Kontostandes des Teilnehmers anfordert, und dem Authentifizierungs-Kontrollpunkt (10) mit einer Antwort-Nachricht zur Zwischen-Abrechnung (110) antwortet; und
der Dienstkontrollpunkt (30) ferner so ausgestattet ist, dass er den Kontostand des Teilnehmers aktualisiert und dem Authentifizierungs-Server mit einer Antwort-Nachricht auf die Authentifizierungs-Anforderung antwortet, die das Ergebnis der Überprüfung umfasst (110).

4. Prepaid-Abrechnungssystem für ein drahtloses lokales Netzwerk gemäß Anspruch 1, wobei
der Authentifizierungs-Kontrollpunkt (10) ferner so ausgestattet ist, dass er an den Authentifizierungs-Server (20) eine Nachricht zur Anforderung der Beendigung der Abrechnung (112) sendet, die Informationen über die Gesamtdauer und den Gesamtverkehr des Zugriffs auf das lokale Netzwerk durch den Teilnehmer umfasst;
der Authentifizierungs-Server (20) ferner so ausgestattet ist, dass er dem Authentifizierungs-Kontrollpunkt (10) mit einer Antwort-Nachricht über die Beendigung der Abrechnung (113) antwortet und die Authentifizierungs-Anforderungs-Nachricht an den Dienstkontrollpunkt (114) sendet; und
der Dienstkontrollpunkt (30) ferner so ausgestattet ist, dass er den Kontostand des Teilnehmers aktualisiert und dem Authentifizierungs-Server mit einer Antwort-Nachricht auf die Authentifizierungs-Anforderung (115) antwortet.

5. Prepaid-Abrechnungsverfahren für ein drahtloses lokales Netzwerk, das folgende Schritte umfasst:
A. beim Abrechnungsbeginn fordert ein Authentifizierungs-Server (20) einen Dienstkontrollpunkt (30) auf, den Kontostand eines Teilnehmers gemäß einer Abrechnungs-Information von einem Authentifizierungs-Kontrollpunkt (10) zu überprüfen, und der Dienstkontrollpunkt (30) antwortet dem Authentifizierungs-Server (20) mit dem Ergebnis der Überprüfung;
B. während der Abrechnung für den Teilnehmer fordert der Authentifizierungs-Server (20) den Dienstkontrollpunkt regelmäßig auf, den Kontostand des Teilnehmers entsprechend der Abrechnungs-Information zu überprüfen, und der Dienstkontrollpunkt (30) aktualisiert den Kontostand des Teilnehmers als Reaktion auf die Anforderung vom Authentifizierungs-Server (20) und antwortet dem Authentifizierungs-Server mit dem Ergebnis der Überprüfung; und
C. bei Beendigung der Abrechnung benachrichtigt der Authentifizierungs-Server (20) den Dienstkontrollpunkt (30) über die Beendigung der Abrechnung für den Teilnehmer entsprechend der Abrechnungs-Information, und der Dienstkontrollpunkt aktualisiert den Kontostand,
wobei ein Authentifizierungs-Protokoll für die Kommunikation zwischen dem Authentifizierungs-Kontrollpunkt (10) und dem Authentifizierungs-Server (20) verwendet wird, ein Protokoll für die drahtlose Kommunikation, das sich vom Authentifizierungs-Protokoll unterscheidet, für die Kommunikation zwischen dem Authentifizierungs-Server (20) und dem Dienstkontrollpunkt (30) verwendet wird, und der Authentifizierungs-Server (20) das Authentifizierungs-Protokoll und das Protokoll für die drahtlose Kommunikation zwischen dem Authentifizierungs-Kontrollpunkt (10) und dem Dienstkontrollpunkt (30) umwandelt.

6. Prepaid-Abrechnungsverfahren für ein drahtloses lokales Netzwerk gemäß Anspruch 5, wobei der Schritt A ferner folgende Teil-Schritte umfasst:
A1. der Authentifizierungs-Kontrollpunkt sendet eine Anforderungs-Nachricht zum Start der Abrechnung (104), die die Abrechnungs-Information des Teilnehmers umfasst, an den Authentifizierungs-Server;
A2. der Authentifizierungs-Server sendet eine Authentifizierungs-Anforderungs-Nachricht (105) an den Dienstkontrollpunkt, um die Überprüfung des Kontostandes des Teilnehmers anzufordern;
A3. der Dienstkontrollpunkt antwortet dem Authentifizierungs-Server mit einer Antwort-Nachricht auf die Authentifizierungs-Anforderung (106), die das Ergebnis der Überprüfung umfasst; und
A4. der Authentifizierungs-Server antwortet dem Authentifizierungs-Kontrollpunkt mit einer Antwort-Nachricht über den Start der Abrechnung (107).

7. Prepaid-Abrechnungsverfahren für ein drahtloses lokales Netzwerk gemäß Anspruch 5, wobei der Schritt B ferner folgende Teil-Schritte umfasst:
B1. der Authentifizierungs-Kontrollpunkt sendet an den Authentifizierungs-Server regelmäßig eine Nachricht zur Anforderung einer Zwischen-Abrechnung (108), die Informationen über die Gesamtdauer und den Gesamtverkehr des Zugriffs auf das lokale Netzwerk durch den Teilnehmer umfasst;
B2. der Authentifizierungs-Server sendet an den Dienstkontrollpunkt eine Authentifizierungs-Anforderungs-Nachricht (109), um die Überprüfung des Kontostandes des Teilnehmers anzufordern;
B3. der Dienstkontrollpunkt aktualisiert den Kontostand des Teilnehmers und antwortet dem Authentifizierungs-Server mit einer Antwort-Nachricht auf die Authentifizierungs-Anforderung (110), die das Ergebnis der Überprüfung umfasst; und
B4. der Authentifizierungs-Server antwortet dem Authentifizierungs-Kontrollpunkt mit einer Zwischen-Abrechnungs-Antwort-Nachricht (111).

8. Prepaid-Abrechnungsverfahren für ein drahtloses lokales Netzwerk gemäß Anspruch 5, wobei der Schritt C ferner folgende Teil-Schritte umfasst:
C1. der Authentifizierungs-Kontrollpunkt sendet an den Authentifizierungs-Server eine Nachricht zur Anforderung der Beendigung der Abrechnung (112), die Informationen über die Gesamtdauer und den Gesamtverkehr des Zugriffs auf das lokale Netzwerk durch den Teilnehmer umfasst;
C2. der Authentifizierungs-Server antwortet dem Authentifizierungs-Kontrollpunkt mit einer Antwort-Nachricht über die Beendigung der Abrechnung (113);
C3. der Authentifizierungs-Server sendet die Authentifizierungs-Anforderungs-Nachricht an den Dienstkontrollpunkt (114); und
C4. der Dienstkontrollpunkt aktualisiert den Kontostand des Teilnehmers und antwortet dem Authentifizierungs-Server mit einer Antwort-Nachricht auf die Authentifizierungs-Anforderung (115).

9. Prepaid-Abrechnungsverfahren für ein drahtloses lokales Netzwerk gemäß Anspruch 5, 6, 7 oder 8, wobei bei einer System-Initialisierung das Verfahren ferner folgende Schritte umfasst:
der Dienstkontrollpunkt (30) fordert den Authentifizierungs-Server (20) auf, mit ihm eine Kurznachrichten-Peer-to-Peer-Verbindung aufzubauen; und
der Authentifizierungs-Server (20) antwortet und baut die Kurznachrichten-Peer-to-Peer-Verbindung auf.

10. Prepaid-Abrechnungsverfahren für ein drahtloses lokales Netzwerk gemäß Anspruch 5, 6, 7 oder 8, wobei beim Abbau der Verbindung zum drahtlosen lokalen Netzwerk das Verfahren ferner folgende Schritte umfasst:
der Authentifizierungs-Server (20) fordert den Dienstkontrollpunkt (30) auf, die Verbindung abzubauen; und Der Dienstkontrollpunkt (30) antwortet dem Authentifizierungs-Server (20) als Reaktion auf die Anforderung.

11. Prepaid-Abrechnungsverfahren für ein drahtloses lokales Netzwerk gemäß Anspruch 5, 6, 7 oder 8, das vor Schritt A ferner folgenden Schritt umfasst:
der Teilnehmer erhält durch eine Authentifizierung Zugriff auf das drahtlose lokale Netzwerk.

## Revendications

1. Système comptable avec prépaiement destiné à un réseau local sans fil, WLAN, comprenant :
un point de contrôle d'authentification (10) ;
un serveur d'authentification (20) ; et
un point de contrôle de service (30), dans lequel
le point de contrôle d'authentification (10) est agencé afin de contrôler un accès d'un abonné au réseau local sans fil, d'envoyer au serveur d'authentification un message de requête comptable d'un protocole d'authentification comprenant des informations comptables (104, 108, 112), et de poursuivre ou de mettre fin à l'accès de l'abonné au WLAN conformément à un message de réponse (107, 111, 113) provenant du serveur d'authentification ;
le serveur d'authentification (20) est agencé afin de recevoir le message de requête comptable du protocole d'authentification de la part du point de contrôle d'authentification, de convertir le message de requête comptable du protocole d'authentification en un message de requête d'authentification d'un protocole de communication sans fil différent du protocole d'authentification, d'envoyer au point de contrôle de service le message de requête d'authentification du protocole de communication sans fil requérant une mise à jour (105, 109, 114) et une vérification du solde de l'abonné, et d'indiquer au point de contrôle d'authentification (10) si l'abonné est autorisé ou non à continuer à accéder au réseau conformément à une réponse (106, 110, 115) provenant du point de contrôle de service ; et
le point de contrôle de service (30) est agencé afin de stocker des informations de l'abonné, et de mettre à jour et d'indiquer au serveur d'authentification (20) le solde de l'abonné conformément au message de requête d'authentification (105, 109, 114).

2. Système comptable avec prépaiement destiné à un réseau local sans fil selon la revendication 1, dans lequel
le point de contrôle d'authentification (10) est en outre agencé afin d'envoyer au serveur d'authentification un message de requête de lancement de comptabilité (104), qui comprend des informations comptables de l'abonné ;
le serveur d'authentification (20) est en outre agencé afin d'envoyer au point de contrôle de service le message de requête d'authentification (105) requérant la vérification du solde de l'abonné, et de répondre au point de contrôle d'authentification (10) par un message de réponse de lancement de comptabilité (107) lors de la réception du message de réponse ; et
le point de contrôle de service (30) est en outre agencé afin de répondre au serveur d'authentification avec un message de réponse à la requête d'authentification (106) comprenant le résultat de la vérification.

3. Système comptable avec prépaiement destiné à un réseau local sans fil selon la revendication 1, dans lequel
le point de contrôle d'authentification (10) est en outre agencé afin d'envoyer périodiquement au serveur d'authentification un message de requête de comptabilité intermédiaire (108), qui comprend les informations relatives à la durée totale et au trafic total de l'accès au réseau local sans fil de l'abonné ;
le serveur d'authentification (20) est en outre agencé afin d'envoyer au point de contrôle de service le message de requête d'authentification (109) demandant la vérification du solde de l'abonné, et de répondre au point de contrôle d'authentification (10) avec un message de réponse de comptabilité intermédiaire (111) ; et
le point de contrôle de service (30) est en outre agencé afin de mettre à jour le solde de l'abonné et de répondre au serveur d'authentification avec un message de réponse de demande d'authentification comprenant le résultat de la vérification (110).

4. Système comptable avec prépaiement destiné à un réseau local sans fil selon la revendication 1, dans lequel
le point de contrôle d'authentification (10) est en outre agencé afin d'envoyer au serveur d'authentification (20) un message de requête de fin de comptabilité (112), qui comprend des informations relatives à la durée totale et au trafic total de l'accès au réseau local sans fil de l'abonné ;
le serveur d'authentification (20) est en outre agencé afin de répondre au point de contrôle d'authentification (10) avec un message de réponse de fin de comptabilité (113), et d'envoyer le message de requête d'authentification au point de contrôle de service (114) ; et
le point de contrôle de service (30) est en outre agencé afin de mettre à jour le solde de l'abonné et de répondre au serveur d'authentification avec un message de réponse à la requête d'authentification (115).

5. Procédé comptable avec prépaiement destiné à un réseau local sans fil, comprenant les étapes suivantes :
A. lors du lancement de la comptabilité, un serveur d'authentification (20) demande à un point de contrôle de service (30) de vérifier le solde d'un abonné conformément aux informations comptables provenant d'un point de contrôle d'authentification (10), et le point de contrôle de service (30) répond au serveur d'authentification (20) avec le résultat de la vérification ;
B. pendant la comptabilité de l'abonné, le serveur d'authentification (20) demande périodiquement au point de contrôle de service de vérifier le solde de l'abonné conformément aux informations comptables, et le point de contrôle de service (30) met à jour le solde de l'abonné en réponse à la requête provenant du serveur d'authentification (20) et répond au serveur d'authentification avec le résultat de la vérification ; et
C. à la fin de la comptabilité, le serveur d'authentification (20) indique au point de contrôle de service (30) la fin de la comptabilité de l'abonné conformément aux informations comptables, et le point de contrôle de service met à jour le solde,
dans lequel un protocole d'authentification est utilisé pour la communication entre le point de contrôle d'authentification (10) et le serveur d'authentification (20), un protocole de communication sans fil différent du protocole d'authentification est utilisé pour la communication entre le serveur d'authentification (20) et le point de contrôle de service (30), et le serveur d'authentification (20) convertit le protocole d'authentification et le protocole de communication sans fil entre le point de contrôle d'authentification (10) et le point de contrôle de service (30).

6. Procédé comptable avec prépaiement destiné à un réseau local sans fil selon la revendication 5, dans lequel l'étape A comprend en outre les sous-étapes suivantes :
A1. le point de contrôle d'authentification envoie au serveur d'authentification un message de requête de lancement de comptabilité (104), qui comprend les informations comptables de l'abonné ;
A2. le serveur d'authentification envoie au point de contrôle de service un message de requête d'authentification (105), afin de requérir la vérification du solde de l'abonné ;
A3. le point de contrôle de service répond au serveur d'authentification avec un message de réponse à la requête d'authentification (106) comprenant le résultat de la vérification ; et
A4. le serveur d'authentification répond au point de contrôle d'authentification avec un message de réponse de lancement de comptabilité (107).

7. Procédé comptable avec prépaiement destiné à un réseau local sans fil selon la revendication 5, dans lequel l'étape B comprend en outre les sous-étapes suivantes :
B1. le point de contrôle d'authentification envoie périodiquement au serveur d'authentification un message de requête de comptabilité intermédiaire (108), qui comprend des informations relatives à la durée totale et au trafic total de l'accès au réseau local sans fil de l'abonné ;
B2. le serveur d'authentification envoie au point de contrôle de service un message de requête d'authentification (109), afin de requérir la vérification du solde de l'abonné ;
B3. le point de contrôle de service met à jour le solde de l'abonné et répond au serveur d'authentification avec un message de réponse à la requête d'authentification (110) comprenant le résultat de la vérification ;
et
B4. le serveur d'authentification répond au point de contrôle d'authentification avec un message de réponse de comptabilité intermédiaire (111).

8. Procédé comptable avec prépaiement destiné à un réseau local sans fil selon la revendication 5, dans lequel l'étape C comprend en outre les sous-étapes suivantes :
C1. le point de contrôle d'authentification envoie au serveur d'authentification un message de requête de fin de comptabilité (112), qui comprend des informations relatives à la durée totale et au trafic total de l'accès au réseau local sans fil de l'abonné ;
C2. le serveur d'authentification répond au point de contrôle d'authentification avec un message de réponse de fin de comptabilité (113) ;
C3. le serveur d'authentification envoie le message de requête d'authentification au point de contrôle de service (114) ; et
C4. le point de contrôle de service met à jour le solde de l'abonné et répond au serveur d'authentification avec un message de réponse à la requête d'authentification (115).

9. Procédé comptable avec prépaiement destiné à un réseau local sans fil selon la revendication 5, 6, 7 ou 8, dans lequel, lors d'une initialisation d'un système, le procédé comprend en outre les étapes suivantes :
le point de contrôle de service (30) requiert au serveur d'authentification (20) d'établir une connexion d'égal à égal de messages courts avec celui-ci ; et
le serveur d'authentification (20) répond et établit la connexion d'égal à égal de messages courts.

10. Procédé comptable avec prépaiement destiné à un réseau local sans fil selon la revendication 5, 6, 7 ou 8, dans lequel, lors de la déconnexion du réseau local sans fil, le procédé comprend en outre les étapes suivantes :
le serveur d'authentification (20) requiert au point de contrôle de service (30) de libérer la connexion ; et
le point de contrôle de service (30) répond au serveur d'authentification (20) en réponse à la requête.

11. Procédé comptable avec prépaiement destiné à un réseau local sans fil 5, 6, 7 ou 8, comprenant en outre l'étape suivante avant l'étape A :
l'abonné accède au réseau local sans fil par le biais d'une authentification.
